# EUROPEAN PATENT SPECIFICATION

(11) **EP 3 540 551 B1**
(45) Date of publication and mention of the grant of the patent: **29.07.2020**
(21) Application number: 19162683.7
(22) Date of filing: 13.03.2019
(51) Int. Cl.: G05D 1/00, B64D 45/00, G01C 23/00, G08G 5/00

(54) **FLIGHT CONTROL SYSTEM**
FLUGSTEUERUNGSSYSTEM
SYSTÈME DE CONTRÔLE DE VOL

(30) Priority: 16.03.2018 US 201815923818
(43) Date of publication of application: 18.09.2019
(73) Proprietor: Honeywell International Inc., Morris Plains, NJ 07950 (US)
(72) Inventor: HU, Yong, Morris Plains, NJ 07950 (US); CHEN, Lucas, Morris Plains, NJ 07950 (US); CUI, Qiushi, Morris Plains, NJ 07950 (US); FU, Xiaolei, Morris Plains, NJ 07950 (US); FENG, Wenwan, Morris Plains, NJ 07950 (US)
(74) Representative: Houghton, Mark Phillip

(56) References cited:
- EP-A1- 2 687 438
- US-A- 5 330 131
- US-A1- 2010 025 544
- US-B1- 7 711 455
- Burcham ET AL: "Using Engine Thrust for Emergency Flight Control: MD-11 and B-747 Results", , 1 May 1998 (1998-05-01), XP055592017, Retrieved from the Internet: URL:https://pdfs.semanticscholar.org/6372/ 339763dbf3977cb31fe105ad09b30c29e721.pdf [retrieved on 2019-05-27]

## Description

### TECHNICAL FIELD

The present disclosure generally relates to flight control systems, and more specifically to a flight control system configured to aid a pilot in controlling an aircraft in the unlikely event that control of primary flight surfaces of the aircraft has been lost.

### BACKGROUND

Modern aircraft have good safety records, and safety incidents involving modern commercial aircraft are very rare. However, there is always a desire to further improve aircraft safety.

In commercial aircraft aviation, rare historic safety incidents have occurred when a total loss of control of the primary aircraft control surfaces, such as the ailerons and the rudder, occurs. There is therefore a need for a flight control system that would assist the pilot of an aircraft in such emergency situations.

US7711455 discloses a ow-cost, easily retrofit Propulsion Controlled Aircraft (PCA) system for use on a wide range of commercial and military aircraft consists of an propulsion controlled aircraft computer that reads in aircraft data including aircraft state, pilot commands and other related data, calculates aircraft throttle position for a given maneuver commanded by the pilot, and then displays both current and calculated throttle position on a cockpit display to show the pilot where to move throttles to achieve the commanded maneuver, or is automatically sent digitally to command the engines directly.

US5330131 discloses a backup flight control system for controlling the flightpath of a multi-engine airplane using the main drive engines. The backup flight control system comprises an input device for generating a control command indicative of a desired flightpath, a feedback sensor for generating a feedback signal indicative of at least one of pitch rate, pitch attitude, roll rate and roll attitude, and a control device for changing the output power of at least one of the main drive engines on each side of the airplane in response to the control command and the feedback signal.

EP2687438A1 discloses a control system of an aircraft that includes a computer that controls flight based on either a flight control law that controls flight by controlling the deflection angles of control surfaces or a control surface/thrust integrated flight control law that controls flight by controlling the deflection angles of the control surfaces and engine thrust, and a control surface failure/damage detection device that detects that at least one of the control surfaces is malfunctioning. If malfunctioning of the control surface(s) is detected, the deflection angles and the rates of change of the deflection angles of the control surfaces that are necessary for realization of desired flight characteristics are calculated based on the detection result, and the necessity of switching from the flight control law to the control surface/thrust integrated flight control law is judged by judging whether or not the calculated deflection angles or rates of change of the deflection angles exceed an acceptable range of change.

### BRIEF SUMMARY

The present invention in its various aspects is as set out in the appended claims. This summary is provided to introduce a selection of concepts in a simplified form that are further described below in the detailed description section.

In an exemplary embodiment, there is provided a flight control system for an aircraft having multiple engines and a trimmable stabilizer. The flight control system includes at least one sensor for sensing aircraft parameters, for example airspeed, track angle and/or flight path angle. The flight control system further includes a detector for detecting a total loss of control of the primary flight surfaces of the aircraft. The flight control system further includes an emergency flight controller for receiving a pilot input. The emergency flight controller is in operable communication with the at least one sensor and with the detector and is configured to determine thrust targets for the multiple engines and a target stabilizer position for the trimmable stabilizer on the basis of the pilot input and sensed aircraft parameters when the detector detects a total loss of control of the primary flight surfaces of the aircraft. The flight control system also includes a guidance module configured to provide instructions to a pilot as to how to control the engine thrusts toward the thrust targets and as how to control the trimmable stabilizer towards the target stabilizer position.

In another exemplary embodiment, there is provided a method for providing control instructions to a pilot of an aircraft. The method includes detecting, by a detector, a total loss of control of primary flight surfaces of the aircraft and transmitting, by a processor, an emergency signal to an emergency flight controller. The method further includes receiving a pilot input from a pilot. The method further includes determining a target thrust for each engine of the aircraft and a target stabilizer position for a trimmable stabilizer of the aircraft on the basis of the pilot input and sensed aircraft parameters. The method further includes providing instructions to the pilot as to how to control engine thrusts toward the target thrust for each engine and as to how to control a trimmable stabilizer position toward the target trimmable stabilizer position.

In another exemplary embodiment, there is provided an aircraft having multiple engines and a trimmable stabilizer, together with a flight control system. The flight control system includes at least one sensor for sensing aircraft parameters, for example airspeed, track angle and/or flight path angle. The flight control system further includes a detector for detecting a total loss of control of the primary flight surfaces of the aircraft. The flight control system further includes an emergency flight controller for receiving a pilot input. The emergency flight controller is in operable communication with the at least one sensor and with the detector and is configured to determine thrust targets for the multiple engines and a target stabilizer position for the trimmable stabilizer on the basis of the pilot input and sensed aircraft parameters when the detector detects a total loss of control of the primary flight surfaces of the aircraft. The flight control system also includes a guidance module configured to provide instructions to a pilot as to how to control the engine thrusts toward the thrust targets and as how to control the trimmable stabilizer towards the target stabilizer position.

Other desirable features will become apparent from the following detailed description and the appended claims, taken in conjunction with the accompanying drawings and this background.

### BRIEF DESCRIPTION OF THE DRAWINGS

A more complete understanding of the subject matter may be derived from the following detailed description taken in conjunction with the accompanying drawings, wherein like reference numerals denote like elements, and wherein:
FIG. 1 is a schematic of a flight control system in accordance with an exemplary embodiment;
FIG. 2 is a diagrammatic flowchart of a flight control system in accordance with an exemplary embodiment;
FIG. 3A shows examples of visual action cues in accordance with an exemplary embodiment;
FIG 3B shows examples of visual action cues in accordance with an exemplary embodiment;
FIG. 4A shows examples of visual action cues in accordance with an exemplary embodiment;
FIG. 4B shows examples of visual action cues in accordance with an exemplary embodiment;
FIG. 4C shows examples of visual action cues in accordance with an exemplary embodiment;
FIG. 5 shows a scenario in which the flight control system of an exemplary embodiment is implemented;
FIG. 6 shows a scenario in which the flight control system of an exemplary embodiment is implemented;
FIG. 7 shows a scenario in which the flight control system of an exemplary embodiment is implemented;
FIG. 8 shows a scenario in which the flight control system of an exemplary embodiment is implemented;
FIG. 9 shows a scenario in which the flight control system of an exemplary embodiment is implemented;
FIG. 10 shows a scenario in which the flight control system of an exemplary embodiment is implemented;
FIG. 11 shows a scenario in which the flight control system of an exemplary embodiment is implemented; and
FIG. 12 shows a flowchart in accordance with an exemplary embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the systems and methods defined by the claims. Furthermore, there is no intention to be bound by any expressed or implied theory presented in the preceding Technical Field, Background, Brief Summary or the following Detailed Description.

For the sake of brevity, conventional techniques and components may not be described in detail herein. Furthermore, any connecting lines shown in the various figures contained herein are intended to represent example functional relationships and/or physical couplings between the various elements. It should be noted that many alternative or additional functional relationships or physical connections may be present in an embodiment of the present disclosure.

When a total loss of the primary aircraft control surfaces of an aircraft occurs, it is possible for a pilot to maneuver an aircraft with multiple engines using differential engine thrust. However, maneuvering the aircraft in this manner is usually difficult for a pilot, since the aircraft may respond to thrust changes in a manner the pilot does not expect. Furthermore, controlling an aircraft using thrust alone requires the pilot to manually change the throttle positions for each engine, which increases the amount of work needed from the pilot. Still further, the loss of the primary control surfaces is likely to induce a degree of stress in the pilot. This stress, coupled with the increase in the amount of work needed from the pilot, may increase the likelihood of the pilot making an error in controlling the thrust-controlled aircraft, which could have severe negative consequences.

Embodiments of the present invention provide a flight control system for assisting pilot control of the aircraft in situations where a loss of control of the primary surfaces of the aircraft occurs.

In an embodiment, an aircraft comprises multiple engines, primary flight surfaces such as ailerons and a rudder, and non-primary flight surfaces, such as a trimmable stabilizer, for example a horizontal stabilizer. In general, non-primary flight surfaces such as a horizontal trimmable stabilizer may still be controlled manually by the pilot in the event of a total loss of control of the primary flight surfaces of the aircraft. The aircraft also comprises a flight control system configured to implement maneuvers commanded by the pilot. That is, suitable software and/or hardware components of the flight control system (such as a processor and a computer-readable storage device) are utilized to implement maneuvers that are input by the pilot.

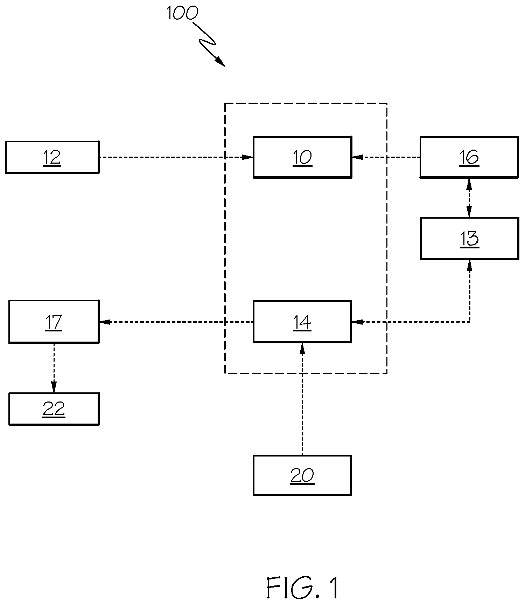

As shown in FIG. 1, the flight control system 100 comprises a flight management control module 10. During normal flight operation of the aircraft, the flight control module 10 receives pilot input via a flight management control panel 16 and implements the inputted maneuver using primary flight surfaces of the aircraft. The flight management control module 10 is also configured to receive information relating to the status of the primary flight surfaces from a primary surface control detector 12.

The primary surface control detector 12 is configured to detect a total loss of control of the primary flight surfaces of the aircraft. When a total loss of control of the primary flight surfaces is detected, the primary surface control detector 12 is configured to transmit a signal signifying this total loss of control to the flight management control module 10. When the flight management control module 10 receives this signal, the flight management control module 10 is configured to switch the mode of operation of the flight control system 100 from a normal flight operation mode into a pilot-in-loop emergency control mode. In an embodiment, the switch from the normal flight operation mode into the pilot-in-loop emergency control mode may be performed automatically by the flight management control module 10. In another embodiment, the switch from the normal flight operation mode into the pilot-in-loop emergency control mode may require pilot confirmation, for example via a cockpit button press from the pilot to signify that this switch to the pilot-in-loop emergency control mode may occur.

The flight control system 100 also includes an emergency flight controller 14. The emergency flight controller 14 is configured to receive data from at least one aircraft sensor 20, the data relating to aircraft parameters, for example airspeed, flight path angle or track angle. In an embodiment, the at least one aircraft sensor includes multiple aircraft sensors. The at least one aircraft sensor may be selected from the group of an airspeed indicator, a gyro meter, a global positioning system (GPS) and so on. In an embodiment, the aircraft parameters are sensed by at least one aircraft sensor 20 and are then transmitted to the emergency flight controller 14 via a normal aircraft databus. In another embodiment, the aircraft parameters are sensed by the at least one aircraft sensor 20 and are then transmitted to the emergency flight controller 14 via a separate transmission path, for example via a dedicated emergency databus.

After the pilot-in-loop emergency control mode is initiated, the emergency flight controller 14 is configured to receive information from a flight management system 13. In an embodiment, the information received by the emergency flight controller 14 from the flight management system 13 relates to the aircraft's flight plan. The flight plan is generally pre-determined, but may be changed by a pilot mid-flight using a flight management control panel 16. For example, if a course change or maneuver is desired, the pilot may input a command for a course change or a desired maneuver into the flight management control panel 16, and this change of course or desired maneuver is transmitted to the flight management system 13. The flight management system 13 then transmits the information about the desired change of course or the desired maneuver to the emergency flight controller 14.

Using the aircraft parameters received from the at least one aircraft sensor 20 and the pilot input received from the flight management system 13, the emergency flight controller 14 is configured to determine target throttle positions for each one of the aircraft engines and a target stabilizer position for the trimmable stabilizer for maneuvering the aircraft. For example, the emergency flight controller 14 may determine the target throttle positions and target stabilizer position for a desired maneuver input by the pilot to perform, such as a descent maneuver, a climb maneuver, and so on. In an embodiment, the emergency flight controller 14 is configured to determine instructions to the pilot to maneuver the aircraft according to an original pre-determined flight course stored in the flight management system 13. In another embodiment, the emergency flight controller 14 is configured to determine instructions to the pilot to maneuver the aircraft along an automatically-determined diverted flight course, for example a flight course routed to a nearby safe landing point.

As explained above, the pilot may input a desired maneuver into the flight management control panel 16. For example, the pilot may input into the flight management control panel 16 that an airspeed increase of 10 knots is desired. Using this pilot input and data from the aircraft sensors 20, the emergency flight controller 14 determines target throttle positions for each engine and a target trimmable stabilizer position to maneuver the aircraft so as to achieve this airspeed increase of 10 knots.

After determination of the target throttle positions for each engine and a target trimmable stabilizer position, instructions relating to these target positions are provided to the pilot using a guidance module 17. In an embodiment, the guidance module 17 comprises a display 22 configured to visually display the target positions to the pilot. In an embodiment, the display 22 is part of existing cockpit equipment. In another embodiment, the display 22 may be a remote display, for example on a handheld computing device operably connected to the emergency flight controller 14, such as a laptop or tablet.

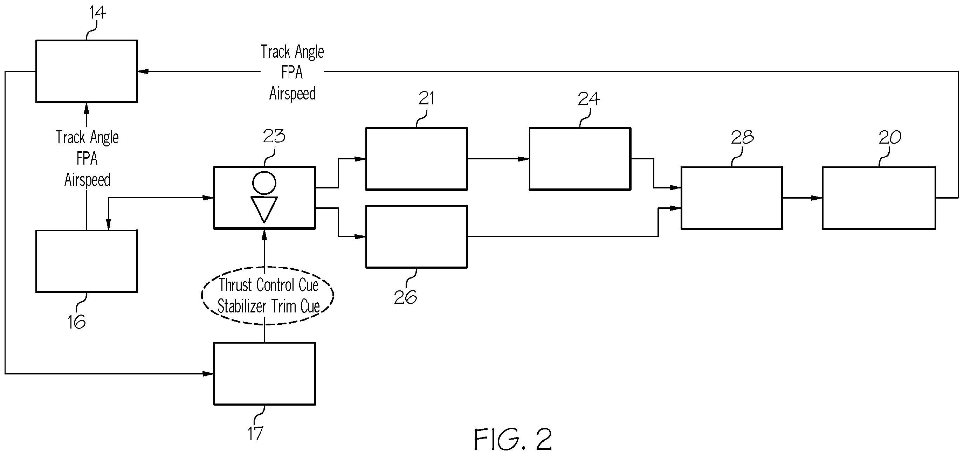

The operation of the flight control system 100 will now be explained in more detail with respect to the flowchart of FIG. 2. When a total loss of control of the primary flight surfaces is detected by the primary surface control detector (not shown in this figure) and the pilot-in-loop emergency control is initiated, the emergency flight controller 14 transmits information to the guidance module 17 to instruct the pilot 23 that the pilot-in-loop emergency control has been initiated.

If the pilot had previously input a desired maneuver prior to a total loss of control of the primary surfaces, or if the pilot subsequently commands a maneuver after the indication that the pilot-in-loop emergency control has been initiated, the emergency flight controller 14 determines target throttle positions for each one of the engines of the aircraft and a target trimmable stabilizer position for the trimmable stabilizer on the basis of the pilot input and the sensed aircraft parameters from the aircraft sensors 20. The emergency flight controller 14 then transmits this information to the guidance module 17. The guidance module 17 displays the target throttle positions and the target trimmable stabilizer position to the pilot 23 in the form of instructions. In an exemplary embodiment, these instructions are provided in the form of visual action cues, as will be explained in more detail below.

After receiving the instructions from the guidance module 17, the pilot 23 then uses a throttle control 21 to adjust the throttle positions of each one of the engines 24 and uses a stabilizer control 26 to adjust the position of the trimmable stabilizer toward the instructed target trimmable stabilizer position. The aircraft parameters correspondingly change in reaction to the pilot's adjustments. The change in the aircraft parameters is shown in FIG. 2 at representative reference numeral 28. The aircraft sensors 20 sense the changed aircraft parameters 28, and then transmit signals representative of these changed aircraft parameters 28 to the emergency flight controller 14. These changed aircraft parameters are associated, for example, with the aircraft's track angle, flight path angle, and airspeed.

If the pilot inputs a desired maneuver into the flight management control panel 16, the emergency flight controller 14 then determines updated target throttle positions for each one of the engines of the aircraft and an updated target stabilizer position on the basis of the pilot input and the changed sensed aircraft parameters 28.

In an embodiment, in order to reduce the amount of information presented to the pilot and thereby reduce the likelihood that the pilot erroneously controls the throttles or trimmable stabilizer position in a manner that is not in accordance with that instructed by the emergency flight controller 14, the guidance module 17 may display the instructions to the pilot in the form of visual action cues.

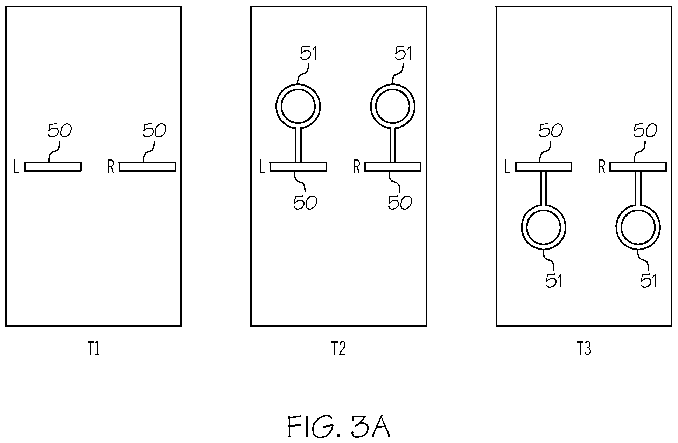

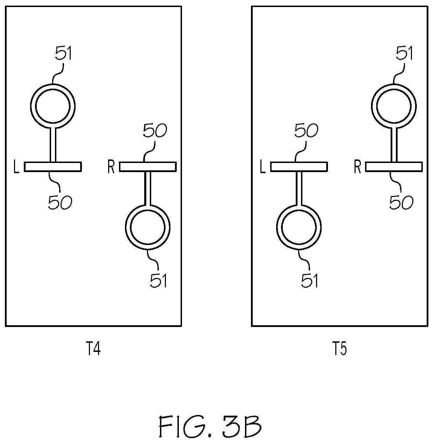

Examples of visual action cues are shown in FIGs. 3A and 3B. Referring firstly to FIG. 3A, example symmetric visual action cues relating to throttle positions for a two-engine aircraft are shown. In scenario T1 of FIG 3A, the emergency flight controller 14 has determined that no adjustment to the throttle position for either a left aircraft engine (L) or a right aircraft engine (R). As such, a blank visual action cue is displayed, indicating that no adjustment to the throttle position should be performed by the pilot. In particular, only a "baseline" 50 for each engine is displayed to the pilot.

In scenario T2 of FIG. 3A, the emergency flight controller 14 has determined that the throttle position of both of the left engine (L) and the right engine (R) should be increased. As such, visual action cues are displayed indicating that the pilot should increase the throttle position for both of the left and right engines. In the exemplary embodiment of T2 of FIG. 3A, the visual action cue for an increase in throttle position is shown as an icon 51 either above or below the baseline 50. The position of the icon 51 with respect to the baseline 50 indicates whether an increase or decrease in throttle position in an easy to understand manner.

In scenario T3 of FIG. 3A, the emergency flight controller 14 has determined that the throttle position of both of the left engine and the right engine should be decreased. As such, visual action cues are displayed indicating that the pilot should decrease the throttle position for both of the left (L) and right (R) engines. In the exemplary embodiments of T2 and T3 FIG. 3A, the visual action cues are shown as an icon 51 above or below a base line 50.

Notably, in the exemplary embodiments of FIG. 3A, by displaying an icon 51 above or below a baseline 50, or displaying only the baseline 50, the pilot is presented with a minimal amount of information needed to perform an instructed adjustment, for example as compared to a bar chart or other form of readout where the pilot must scrutinize the presented data in order to determine the instruction. In particular, the visual action cue presented to the pilot allows for three different instructions per engine, specifically to: increase the throttle for that engine; decrease the throttle for that engine, or take no action. The visual action cue being displayed in this manner to the pilot therefore reduces the likelihood that the pilot erroneously controls the throttle position in an undesired manner. As can also be seen in FIG 3A, a present throttle position is not displayed to the pilot, thereby reducing the information presented to the pilot and thereby reducing the likelihood the pilot will erroneously control the throttle position in an incorrect manner.

When the pilot adjusts the throttle position in accordance with the indicated visual action cue, the sensed aircraft parameters provided to the emergency flight controller 14 change. The emergency flight controller 14 then re-calculates the desired throttle change and, on the basis of the aircraft parameters and information from the flight management control panel 16, the information presented to the pilot is updated. For example, the emergency flight controller 14 may initially provide visual action cues to instruct for the throttle positions of each one of the left and right engines to be increased (as per T2 of FIG. 3A). After the pilot increases these throttle positions accordingly, the emergency flight controller 14 may then present updated visual action cues to instruct the pilot to take no further action (as per T1 of FIG. 3A), thereby indicating to the pilot that the throttle for a particular engine should be increased no further.

Turning to FIG. 3B, example asymmetric visual action cues relating to throttle positions for a two-engine aircraft are shown. In scenario T4 of FIG 3B, the emergency flight controller 14 has determined that the throttle position of the left engine should be increased and that the throttle position of the right engine should be decreased. As such, corresponding visual action cues are displayed to the pilot. In this embodiment, the visual action cues are presented in the form of an icon 51 positioned above or below a baseline 50. In scenario T5 of FIG 3B, the emergency flight controller 14 has determined that the throttle position of the left engine should be decreased and that the throttle position of the right engine should be increased. As such, corresponding visual action cues with icons 51 and baselines 50 are displayed to the pilot.

In an embodiment, further information may be presented to the pilot through the appearance of a characteristic of the icon 51 of the visual action cue. In some exemplary embodiments, a size, color, shape or other characteristic of the icon 51 may indicate a degree of speed of adjustment required in the throttle adjustment. For example, a red-colored icon 51 may indicate to the pilot that a relatively quick adjustment of the throttle position is required, whereas a green icon 51 may indicate to the pilot that a relatively slower or smoother adjustment of the throttle position may be performed.

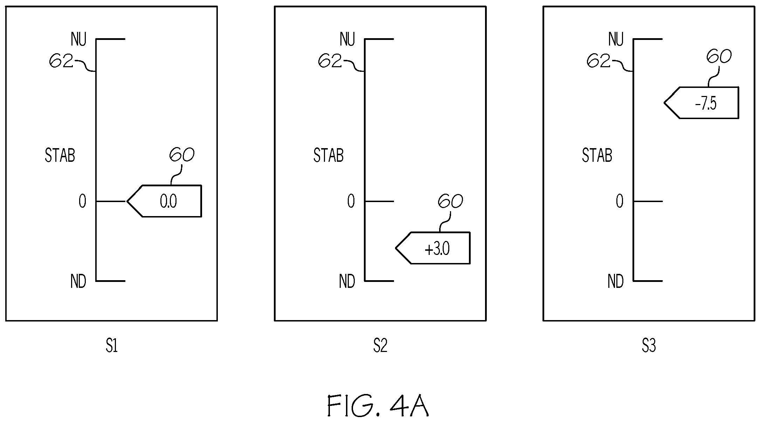

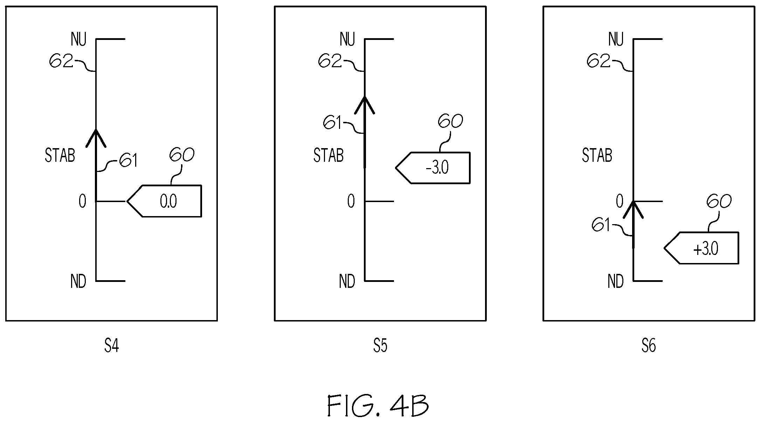

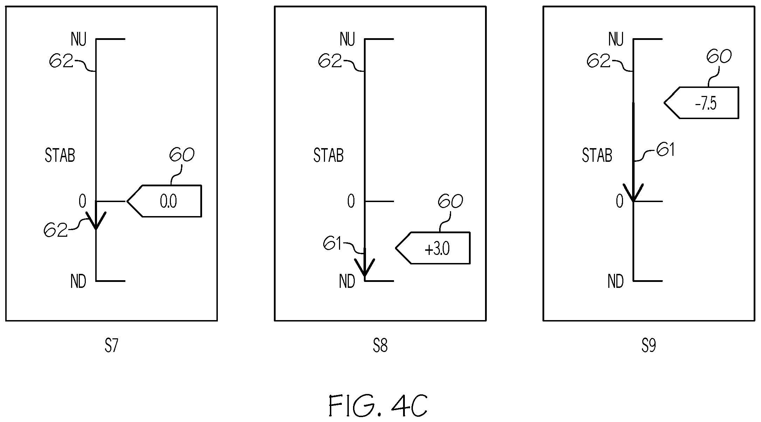

Turning to FIGs. 4A, 4B and 4C, exemplary visual action cues relating to the trimmable stabilizer position are shown. In particular, as shown in scenarios S1, S2 and S3 of FIG, 4A, in one embodiment the horizontal stabilizer is set in a particular position. In the exemplary embodiments of scenarios S1, S2 and S3 of FIG. 4A, the horizontal stabilizer is set in relative positions 0.0, +3.0 and -7.5, respectively. As shown in FIG. 4A, in an exemplary embodiment the present position of the horizontal stabilizer is shown using a marker 60 on a scale 62. The scale has a set position for the trimmable stabilizer (marked as a "0" position). The scale also indicates the position the trimmable stabilizer must be moved for *"nose-up"* (NU) or "*nose-down*" (ND) maneuvers. In the embodiments shown in FIG, 4A, a numerical readout is disposed inside of the marker 60, the numerical readout showing the present position of the horizontal stabilizer.

In scenario S1 of FIG. 4A, the emergency flight controller 14 determines that no adjustment of the horizontal stabilizer position from position 0.0 is required. As such, a "blank" visual action cue is presented to the pilot, thereby indicating to the pilot that no adjustment of the horizontal stabilizer position is required. In scenario S2 of FIG. 4A, the emergency flight controller 14 determines that no adjustment of the horizontal stabilizer position from position -3.0 is required. As such, a blank visual action cue is presented to the pilot. In scenario S3 of FIG. 4A, the emergency flight controller 14 determines that no adjustment of the horizontal stabilizer position from position -7.5 is required. As such, a blank visual action cue is presented to the pilot.

Turning to FIG. 4B, in scenario S4 the emergency flight controller 14 has determined that the position of the horizontal stabilizer should be moved from an initial 0.0 position to a different position as part of a "*nose-up*" maneuver. As such, a visual action cue is displayed to indicate to the pilot that the horizontal stabilizer position should be adjusted. In particular, the direction of the adjustment is indicated with the visual action cue using an icon 61. In the exemplary embodiment shown, the icon 61 is an arrow with one end being positioned in the proximity of the marker indicating the horizontal stabilizer's present position. The pilot is therefore presented with a minimal amount of information needed in order to perform the instructed adjustment of the horizontal stabilizer position.

Similarly, in scenario S5 of FIG 4B, the emergency flight controller 14 has determined that the position of the horizontal stabilizer should be moved from an initial -3.0 position to a different position as part of a "*nose-up*" maneuver. As such, a visual action cue is displayed to indicate to the pilot that the horizontal stabilizer position should be adjusted. In the exemplary embodiment shown, the direction of the adjustment is indicated with the visual action cue using an arrow icon 61 extending from a position close to the marker 60.

Similarly, in scenario S6 of FIG 4B, the emergency flight controller 14 has determined that the position of the horizontal stabilizer should be moved from an initial +3.0 position to a different position as part of a "*nose-up*" maneuver. As such, a visual action cue is displayed to indicate to the pilot that the horizontal stabilizer position should be adjusted. In the exemplary embodiment shown, the direction of the adjustment is indicated with the visual action cue using an arrow icon 61 extending from a position close to the marker 60.

Turning to FIG. 4C, in scenario S7, the emergency flight controller 14 has determined that the position of the horizontal stabilizer should be moved from an initial 0.0 position to a different position as part of a "*nose down*" maneuver. As such, a visual action cue is displayed to indicate to the pilot that the horizontal stabilizer position should be adjusted. In particular, the direction of the adjustment is indicated with the visual action cue using an icon 61. In the exemplary embodiment shown, the icon 61 is an arrow with one end being positioned in the proximity of the marker indicating the horizontal stabilizer's present position. The pilot is therefore presented with a minimal amount of information needed in order to perform the instructed adjustment of the horizontal stabilizer position.

Similarly, in scenario S8 of FIG 4C, the emergency flight controller 14 has determined that the position of the horizontal stabilizer should be moved from an initial +3.0 position to a different position as part of a "*nose down*" maneuver. As such, a visual action cue is displayed to indicate to the pilot that the horizontal stabilizer position should be adjusted. In the exemplary embodiment shown, the direction of the adjustment is indicated with the visual action cue using an arrow icon 61 extending from a position close to the marker 60.

Similarly, in scenario S9 of FIG 4B, the emergency flight controller 14 has determined that the position of the horizontal stabilizer should be moved from an initial -7.5 position to a different position as part of a "*nose down*" maneuver. As such, a visual action cue is displayed to indicate to the pilot that the horizontal stabilizer position should be adjusted. In the exemplary embodiment shown, the direction of the adjustment is indicated with the visual action cue using an arrow icon 61 extending from a position close to the marker 60.

In an embodiment, the icon 61 may display additional information to the pilot. For example, the length of the icon 61 may indicate the amount of adjustment of the horizontal stabilizer required. In one embodiment, the visual action cue icon is an arrow icon 61, and the guidance module 17 is configured to display the base of the arrow icon 61 at a position proximate to the marker 60 indicating the present position of the horizontal stabilizer, for example at -7.5. The guidance module 17 is further configured to display the tip of the arrow icon 61 proximate to the target position of the horizontal stabilizer, for example at 0.0. In this manner, the information presented to the pilot is displayed in an easy-to-interpret manner, thereby reducing the likelihood of the pilot erroneously adjusting the horizontal stabilizer in an undesired manner.

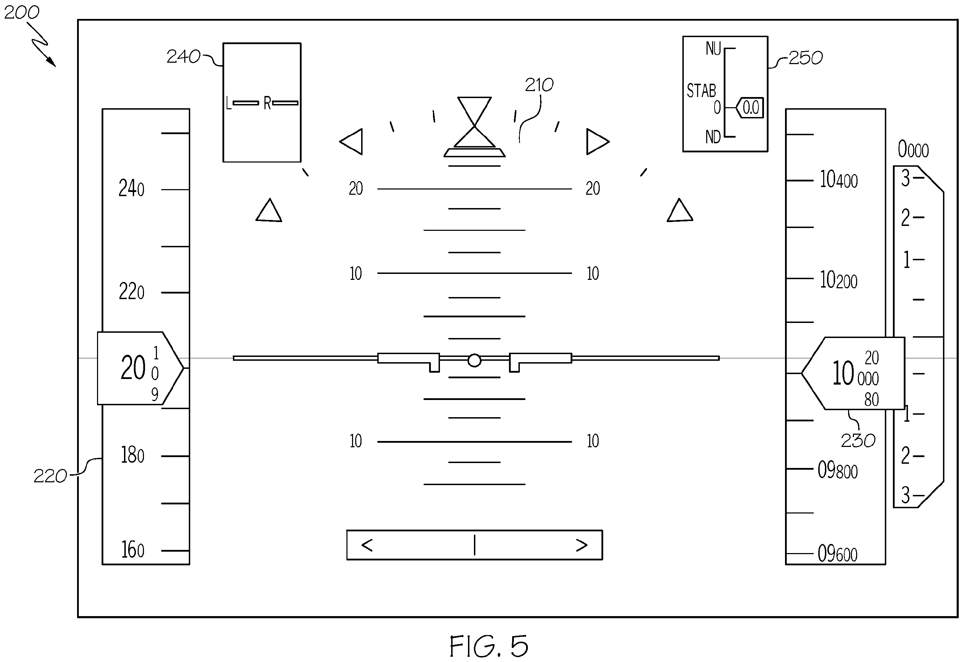

Specific examples as to how the visual action cues are displayed to the pilot will now be explained with reference to Figures 5 to 10.

With reference to FIG. 5, a primary flight display 200 is shown. The primary flight display 200 includes an attitude indictor 210, an airspeed indictor 220 and an altitude indicator 230. When the pilot-in-loop emergency control mode is initiated, the primary flight display 200 also includes a thrust control indicator 240 and a trimmable stabilizer indicator 250. In an embodiment, the thrust control indicator 240 and the horizontal stabilizer trim indicator 250 may be shown on the primary flight display 200 only when the pilot-in-loop emergency control mode is initiated. In another embodiment, the thrust control indicator 240 and the horizontal stabilizer trim indicator 250 are always shown on the primary flight display 200, but no visual action cues are displayed on these indicators 240, 250 until the pilot-in-loop emergency control mode is initiated.

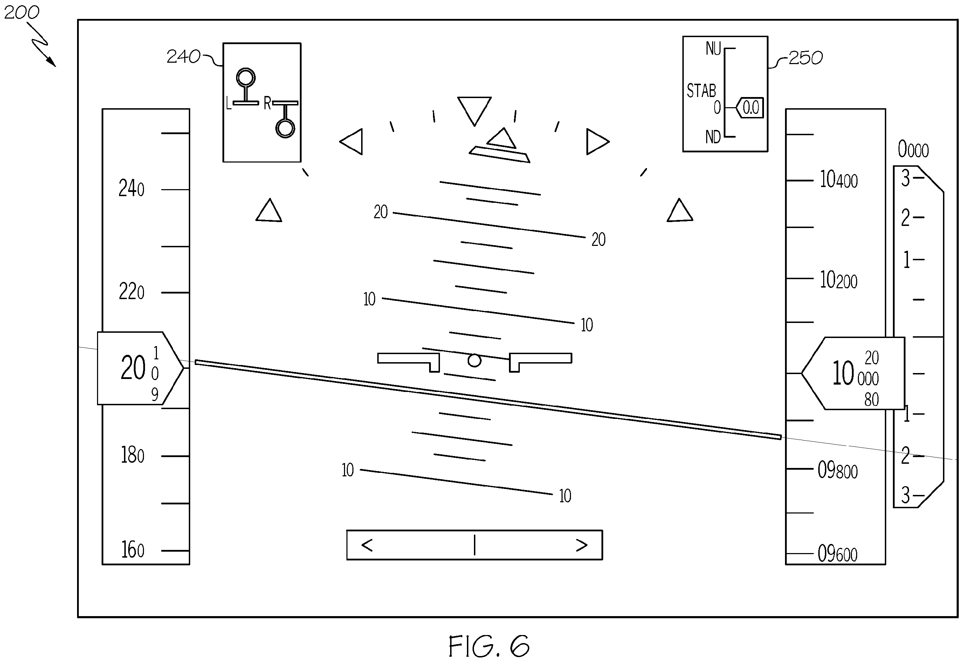

FIG. 6 shows an example of the primary flight display 200 when the primary surface control detector detects that control of the primary surfaces has been lost and the pilot-in-loop emergency control mode has been initiated. In the scenario of FIG. 6, the emergency flight controller 14 receives input from the pilot that a tracking command from about 60 degrees to about 65 degrees is desired. The thrust control indicator 240 therefore displays asymmetric visual action cues to the pilot, instructing the pilot to increase the throttle of the left engine and decrease the throttle of the right engine. When the pilot implements these instructed adjustments, the aircraft tracks accordingly. Since no nose-up or nose-down maneuver is required in this scenario, no visual action cue is displayed on the horizontal stabilizer trim indicator 250.

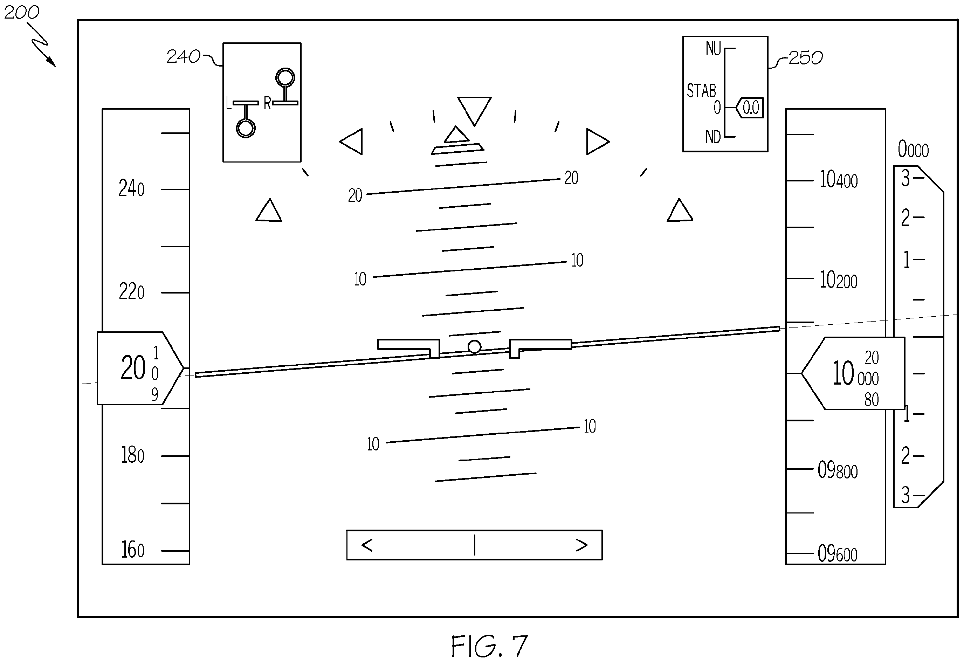

FIG. 7 shows another example of the primary flight display 200 when the primary surface control detector detects that control of the primary surfaces has been lost and the pilot-in-loop emergency control mode has been initiated. In the scenario of FIG. 7, the emergency flight controller 14 receives input from the pilot that a tracking command from about 65 degrees to about 60 degrees is desired. The thrust control indicator 240 therefore displays asymmetric visual cues to the pilot, instructing the pilot to decrease the throttle of the left engine and increase the throttle of the right engine. When the pilot implements these instructed adjustments, the aircraft tracks accordingly. Since no nose-up or nose-down maneuver is required in this scenario, no visual action cue is displayed on the horizontal stabilizer trim indicator 250.

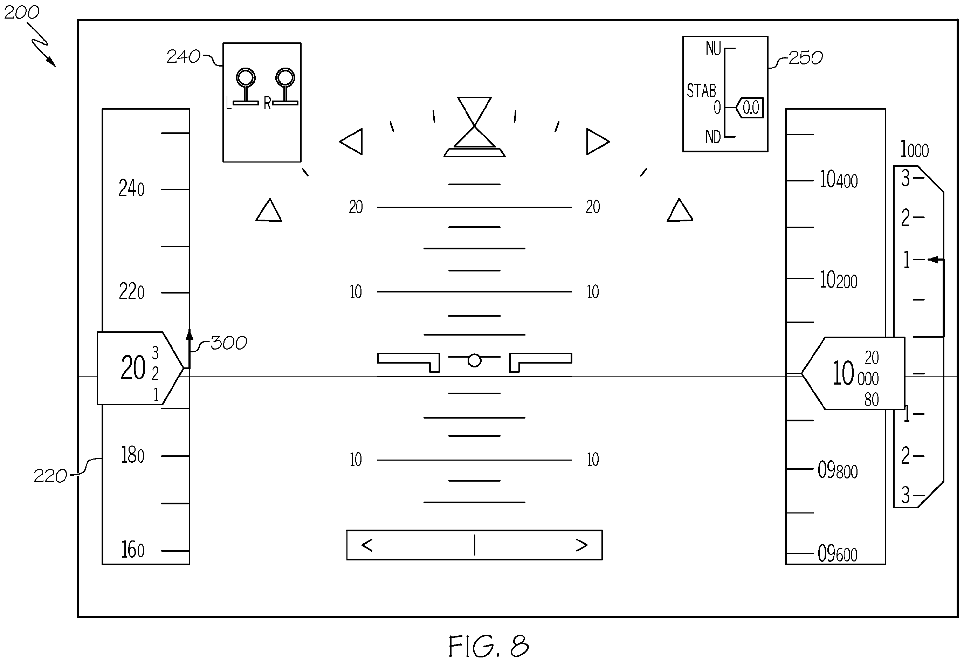

FIG. 8 shows another example of the primary flight display 200 when the primary surface control detector detects that control of the primary surfaces has been lost and the pilot-in-loop emergency control mode has been initiated. In the scenario of FIG. 8, the emergency flight controller 14 receives input from the pilot that a change in the flight path angle from about 0 degrees to about 3 degrees is desired. The thrust control indicator 240 therefore displays symmetric visual cues to the pilot, instructing the pilot to increase the throttle of the left engine and also increase the throttle of the right engine. When the pilot implements these instructed adjustments, the aircraft maneuvers accordingly. Since no nose-up or nose-down maneuver is required in this scenario, no visual action cue is displayed on the horizontal stabilizer trim indicator 250. The change in flight path angle by increasing the throttle in both of the left and right engines will bring about a corresponding increase in the airspeed of the aircraft. In an embodiment, the increase in airspeed is indicated to the pilot via a visual cue 300 on the airspeed indicator 220.

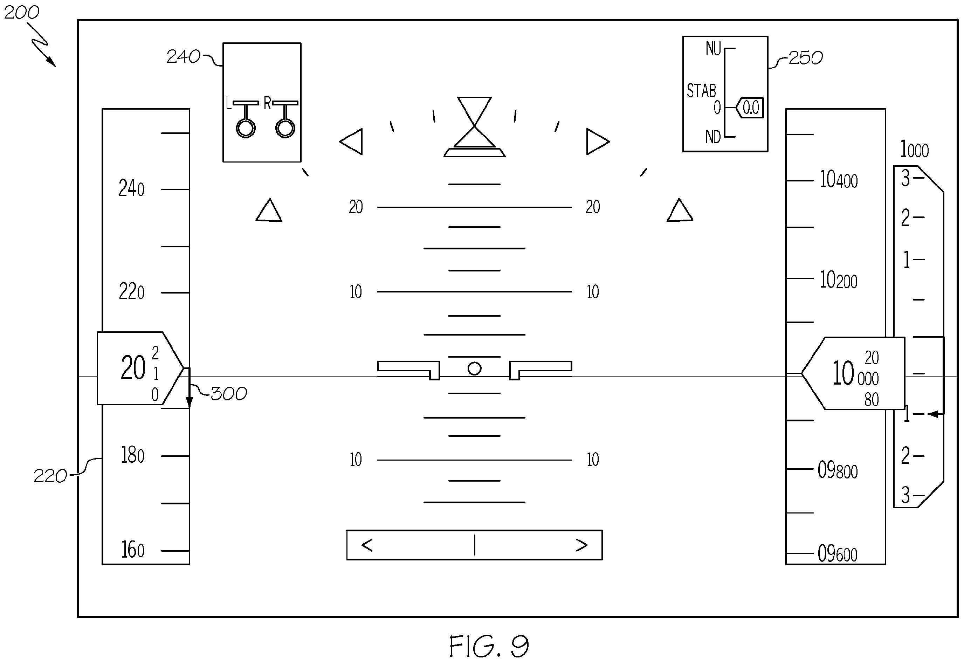

FIG. 9 shows another example of the primary flight display 200 when the primary surface control detector detects that control of the primary surfaces has been lost and the pilot-in-loop emergency control mode has been initiated. In the scenario of FIG. 9, the emergency flight controller 14 receives input from the pilot that a change in the flight path angle from about 3 degrees to about 0 degrees is desired. The thrust control indicator 240 therefore displays symmetric visual cues to the pilot, instructing the pilot to decrease the throttle of the left engine and also decrease the throttle of the right engine. When the pilot implements these instructed adjustments, the aircraft maneuvers accordingly. Since no nose-up or nose-down maneuver is required in this scenario, no visual action cue is displayed on the trimmable stabilizer indicator 250. The change in flight path angle by decreasing the throttle in both of the left and right engines will bring about a corresponding decrease in the airspeed of the aircraft. In an embodiment, the decrease in airspeed is indicated to the pilot via a visual cue 300 on the airspeed indicator 220.

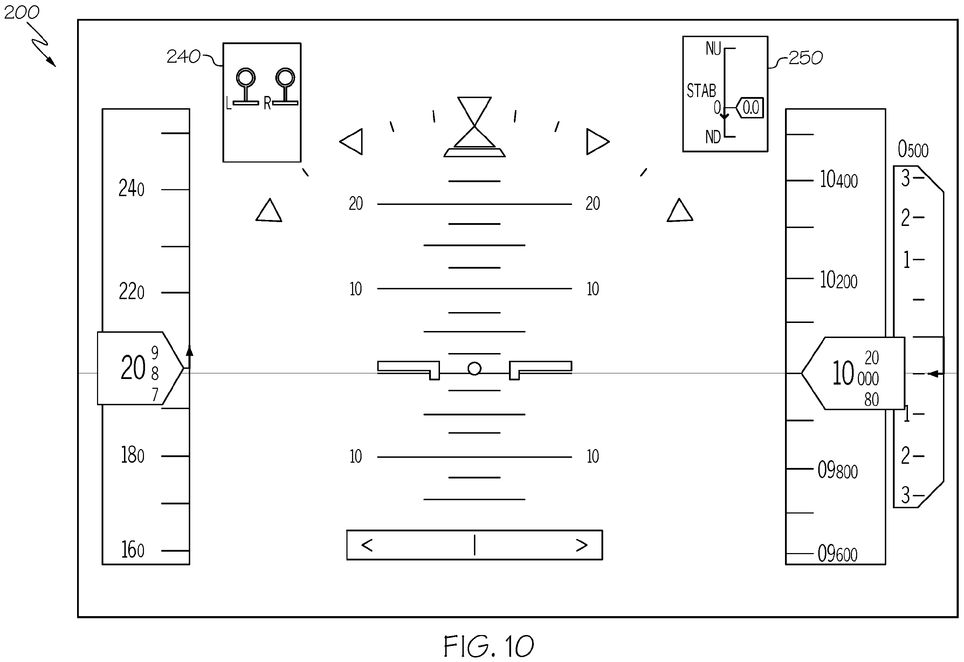

FIG. 10 shows another example of the primary flight display 200 when the primary surface control detector 12 detects that control of the primary surfaces has been lost and the pilot-in-loop emergency control mode has been initiated. In the scenario of FIG. 10, the emergency flight controller 14 receives input from the pilot that a change in the airspeed from around 200 knots to around 210 knots is desired. The thrust control indicator 240 therefore displays symmetric visual cues to the pilot, instructing the pilot to increase the throttle of the left engine and also increase the throttle of the right engine. In order to compensate for the phugoid effect, a "nose down" maneuver is also required to properly control the aircraft during this airspeed increase. As such, a visual action cue indicating that the pilot should adjust the trimmable stabilizer to a more "nose-down" position is displayed on the horizontal stabilizer trim indicator 250. When the pilot implements these instructed adjustments, the aircraft maneuvers accordingly.

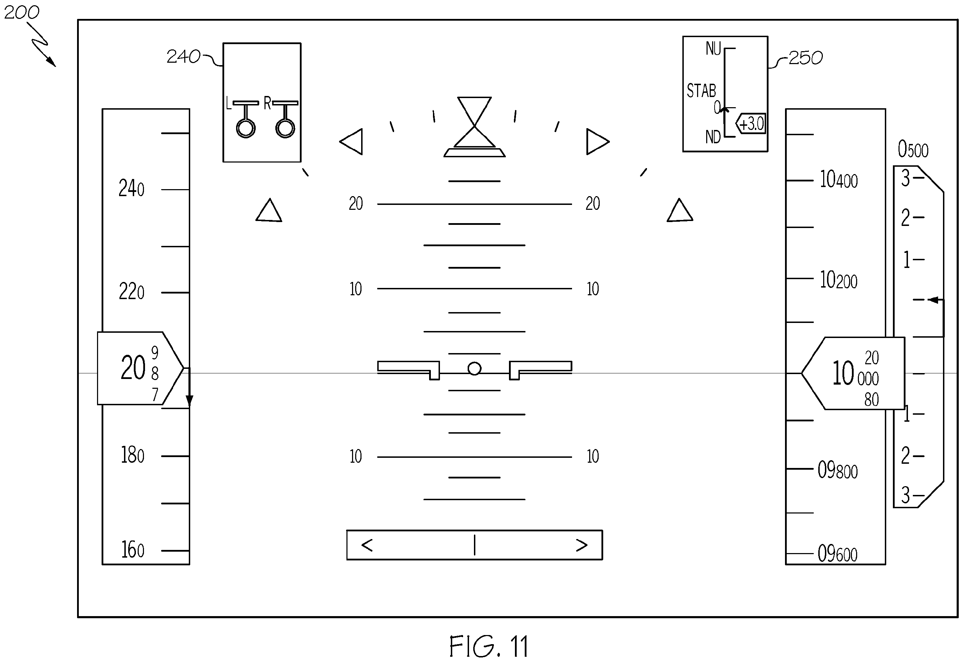

FIG. 11 shows another example of the primary flight display 200 when the primary surface control detector detects that control of the primary surfaces has been lost and the pilot-in-loop emergency control mode has been initiated. In the scenario of FIG. 11, the emergency flight controller 14 receives input from the pilot that a change in the airspeed from around 210 knots to around 200 knots is desired. The thrust control indicator 240 therefore displays symmetric visual cues to the pilot, instructing the pilot to decrease the throttle of the left engine and also decrease the throttle of the right engine. In order to compensate for the phugoid effect, a "nose up" maneuver is also required to properly control the aircraft during this airspeed decrease. As such, a visual action cue indicating that the pilot should adjust the trimmable stabilizer to a more "nose-down" position is displayed on the horizontal stabilizer trim indicator 250. When the pilot implements these instructed adjustments, the aircraft maneuvers accordingly.

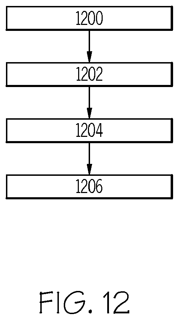

Turning to the flowchart of FIG. 12, a method of providing instructions to a pilot is shown.

At step 1200, a detector detects a total loss of control of primary flight surfaces of an aircraft and transmits an emergency signal to an emergency flight controller. The aircraft has multiple engines and a trimmable stabilizer. At step 1202, a pilot input is transmitted to the emergency flight controller. The pilot input relates to a desired maneuver of the aircraft, for example a tracking command, an airspeed change or a flight path angle change. Upon receiving the pilot input, at step 1204 the emergency flight controller determines a target thrust for each engine of the aircraft and a target trimmable stabilizer position for the trimmable stabilizer on the basis of the pilot input and sensed aircraft parameters in order to perform the desired maneuver and transmits these targets to a guidance module. At step 1206, the guidance module provides instructions to the pilot as to how to control engine thrusts toward the target thrust for each engine and as to how to control a trimmable stabilizer position toward the target trimmable stabilizer position. In an embodiment, the target throttle position for each engine and the target stabilizer position are displayed to the pilot in the form using at least one visual action cue.

## Claims

1. A flight control system (100) for an aircraft with multiple engines and a trimmable stabilizer, comprising:
at least one sensor (20) for sensing aircraft parameters;
a detector (12) for detecting a total loss of control of primary flight control surfaces of the aircraft;
an emergency flight controller (14) for receiving a pilot input, the emergency flight controller being in operable communication with the at least one sensor and with the detector and being configured to determine target thrusts for the multiple engines and a target trimmable stabilizer position for the trimmable stabilizer on the basis of pilot input and sensed aircraft parameters when the detector detects a total loss of control of the primary flight control surfaces of the aircraft; and
a guidance module (17) configured to provide instructions to a pilot as to how to control the engine thrusts toward the thrust targets and as how to control the trimmable stabilizer towards the target trimmable stabilizer position.

2. The flight control system of claim 1, wherein the guidance module is configured to display the instructions to the pilot.

3. The flight control system of claim 2, wherein the guidance module is configured to display the instructions in the form of at least one visual action cue.

4. The flight control system of claim 3, wherein the at least one visual action cue comprises an icon.

5. The flight control system of claim 1, wherein the target stabilizer position for the trimmable stabilizer comprises a target stabilizer position for a trimmable horizontal stabilizer.

6. A method for providing control instructions to a pilot of an aircraft, the method including:
detecting, by a detector (12), a total loss of control of primary flight control surfaces of the aircraft;
upon detecting a total loss of control of primary flight control surfaces of the aircraft, transmitting, by a processor, an emergency signal to an emergency flight controller;
receiving a pilot input;
determining, by a processor, a target thrust for each engine of the aircraft and a target trimmable stabilizer position for a trimmable stabilizer of the aircraft on the basis of the pilot input and sensed aircraft parameters; and
providing instructions to the pilot as to how to control engine thrusts toward the target thrust for each engine and as to how to control a trimmable stabilizer position toward the target trimmable stabilizer position.

7. The method of claim 6, wherein the instructions are displayed to the pilot.

8. The method of claim 7, wherein the instructions are displayed in the form of at least one visual action cue.

9. The method of claim 8, wherein the at least one visual action cue comprises an icon.

10. The method of claim 6, wherein the target trimmable stabilizer position comprises a target trimmable horizontal stabilizer position.

## Patentansprüche

1. Flugsteuerungssystem (100) für ein Flugzeug mit mehreren Triebwerken und einem trimmbaren Stabilisator, umfassend:
mindestens einen Sensor (20) zum Erfassen von Flugzeugparametern;
einen Detektor (12) zum Erkennen eines vollständigen Steuerungsverlusts der primären Flugsteuerflächen des Flugzeugs;
eine Notflugsteuerung (14) zum Empfangen einer Piloteneingabe, wobei die Notflugsteuerung in funktionsfähiger Kommunikation mit dem mindestens einen Sensor und mit dem Detektor steht und konfiguriert ist, um Zielschübe für die mehreren Triebwerke und eine trimmbare Zielstabilisatorposition für den trimmbaren Stabilisator auf der Basis von Piloteneingaben und erfassten Flugzeugparametern zu bestimmen, wenn der Detektor einen vollständigen Steuerungsverlust der primären Flugsteuerflächen des Flugzeugs erkennt; und
ein Führungsmodul (17), das konfiguriert ist, um einem Piloten Anweisungen zur Steuerung der Motorschübe in Richtung der Schubziele und zur Steuerung des trimmbaren Stabilisators in Richtung der trimmbaren Zielstabilisatorposition bereitzustellen.

2. Flugsteuerungssystem nach Anspruch 1, wobei das Führungsmodul konfiguriert ist, um dem Piloten die Anweisungen anzuzeigen.

3. Flugsteuerungssystem nach Anspruch 2, wobei das Führungsmodul konfiguriert ist, um die Anweisungen in Form von mindestens einem visuellen Aktionshinweis anzuzeigen.

4. Flugsteuerungssystem nach Anspruch 3, wobei der mindestens eine visuelle Aktionshinweis ein Symbol umfasst.

5. Flugsteuerungssystem nach Anspruch 1, wobei die Zielstabilisatorposition für den trimmbaren Stabilisator eine Zielstabilisatorposition für einen trimmbaren horizontalen Stabilisator umfasst.

6. Verfahren zum Bereitstellen von Steueranweisungen an einen Piloten eines Flugzeugs, wobei das Verfahren beinhaltet:
Erkennen eines vollständigen Steuerungsverlusts der primären Flugsteuerflächen des Flugzeugs durch einen Detektor (12);
beim Erkennen eines vollständigen Steuerungsverlusts der primären Flugsteuerflächen des Flugzeugs, Senden eines Notsignals an eine Notflugsteuerung durch einen Prozessor;
Empfangen einer Piloteneingabe;
Bestimmen eines Zielschubs für jedes Triebwerk des Flugzeugs und einer trimmbaren Zielstabilisatorposition für einen trimmbaren Stabilisator des Flugzeugs durch einen Prozessor auf der Grundlage der Piloteneingabe und der erfassten Flugzeugparameter; und
Bereitstellen von Anweisungen für den Piloten zur Steuerung der Motorschübe in Richtung des Zielschubs für jeden Motor und zur Steuerung einer trimmbaren Stabilisatorposition in Richtung der trimmbaren Zielstabilisatorposition.

7. Verfahren nach Anspruch 6, wobei die Anweisungen dem Piloten angezeigt werden.

8. Verfahren nach Anspruch 7, wobei die Anweisungen in Form von mindestens einem visuellen Aktionshinweis angezeigt werden.

9. Verfahren nach Anspruch 8, wobei der mindestens eine visuelle Aktionshinweis ein Symbol umfasst.

10. Verfahren nach Anspruch 6, wobei die trimmbare Zielstabilisatorposition eine trimmbare horizontale Zielstabilisatorposition umfasst.

## Revendications

1. Système de contrôle de vol (100) pour un aéronef équipé de multiples moteurs et d'un stabilisateur réglable, comprenant :
au moins un capteur (20) permettant de détecter des paramètres de l'aéronef ;
un détecteur (12) permettant de détecter une perte totale de contrôle des surfaces de contrôle de vol primaires de l'aéronef ;
un contrôleur de vol d'urgence (14) permettant de recevoir une entrée d'un pilote, le contrôleur de vol d'urgence étant en communication fonctionnelle avec le ou les capteurs et avec le détecteur et étant configuré pour déterminer des poussées cibles pour les multiples moteurs et une position de stabilisateur réglable cible pour le stabilisateur réglable sur la base de l'entrée d'un pilote et des paramètres de l'aéronef détectés lorsque le détecteur détecte une perte totale de contrôle des surfaces de contrôle de vol primaires de l'aéronef ; et
un module de guidage (17) configuré pour fournir des instructions à un pilote sur la façon de contrôler les poussées des moteurs pour qu'elles correspondent aux poussées cibles et sur la façon de contrôler le stabilisateur réglable pour qu'il corresponde à la position de stabilisateur réglable cible.

2. Système de contrôle de vol selon la revendication 1, dans lequel le module de guidage est configuré pour afficher les instructions au pilote.

3. Système de contrôle de vol selon la revendication 2, dans lequel le module de guidage est configuré pour afficher les instructions sous la forme d'au moins un signal d'action visuel.

4. Système de contrôle de vol selon la revendication 3, dans le ou les signaux d'action visuels comprennent une icône.

5. Système de contrôle de vol selon la revendication 1, dans lequel la position de stabilisateur cible pour le stabilisateur réglable comprend une position de stabilisateur cible pour un stabilisateur horizontal réglable.

6. Procédé de fourniture d'instructions de contrôle à un pilote d'un aéronef, le procédé consistant à :
détecter, via un détecteur (12), une perte totale de contrôle des surfaces de contrôle de vol primaires de l'aéronef ;
lors de la détection d'une perte totale de contrôle des surfaces de contrôle de vol primaires de l'aéronef, transmettre, via un processeur, un signal d'urgence à un contrôleur de vol d'urgence ;
recevoir une entrée d'un pilote ;
déterminer, via un processeur, une poussée cible pour chaque moteur de l'aéronef et une position de stabilisateur réglable cible pour un stabilisateur réglable de l'aéronef sur la base de l'entrée d'un pilote et des paramètres de l'aéronef détectés ; et
fournir des instructions au pilote sur la façon de contrôler les poussées des moteurs pour qu'elles correspondent à la poussée cible pour chaque moteur et sur la façon de contrôler une position de stabilisateur réglable pour qu'elle corresponde à la position de stabilisateur réglable cible.

7. Procédé selon la revendication 6, dans lequel les instructions sont affichées au pilote.

8. Procédé selon la revendication 7, dans lequel les instructions sont affichées sous la forme d'au moins un signal d'action visuel.

9. Procédé selon la revendication 8, dans lequel le ou les signaux d'action visuels comprennent une icône.

10. Procédé selon la revendication 6, dans lequel la position de stabilisateur réglable cible comprend une position de stabilisateur horizontal réglable cible.
